# EUROPEAN PATENT SPECIFICATION

(11) **EP 2 341 778 B1**
(45) Date of publication and mention of the grant of the patent: **15.01.2014**
(21) Application number: 08876246.3
(22) Date of filing: 06.11.2008
(51) Int. Cl.: A01N 57/20, A01N 25/30, A01N 59/02, A01P 13/00

(54) **A LIQUID, HOMOGENOUS HERBICIDE COMPOSITION, A METHOD OF WEED CONTROL, A METHOD OF PRODUCTION OF LIQUID, HOMOGENOUS HERBICIDE COMPOSITION AND USE OF A LIQUID, HOMOGENOUS HERBICIDE COMPOSITION FOR WEED CONTROL**
FLÜSSIGE HOMOGENE HERBIZIDZUSAMMENSETZUNG, VERFAHREN FÜR DIE BEKÄMPFUNG VON UNKRAUT, VERFAHREN FÜR DIE HERSTELLUNG EINER FLÜSSIGEN HOMOGENEN HERBIZIDZUSAMMENSETZUNG UND VERWENDUNG EINER FLÜSSIGEN HOMOGENEN HERBIZIDZUSAMMENSETZUNG FÜR DIE BEKÄMPFUNG VON UNKRAUT
COMPOSITION HERBICIDE HOMOGENE LIQUIDE , PROCEDE DE DESHERBAGE, PROCEDE DE PRODUCTION DE COMPOSITION HERBICIDE HOMOGENE LIQUIDE ET UTILISATION D'UNE COMPOSITION HERBICIDE HOMOGENE LIQUIDE POUR LE DESHERBAGE

(43) Date of publication of application: 13.07.2011
(73) Proprietor: Sn Biotech Technologies Sp. Z O.o. Sp. K., 62-002 Suchy Las (PL); Woznica, Zenon, 61-194 Poznan (PL)
(72) Inventor: WOZNICA, Zenon, 61-194 Poznan (PL)
(74) Representative: Rzazewska, Dorota
(86) International application number: PCT/PL2008/000079
(87) International publication number: WO 2010/053385

(56) References cited:
- EP-A- 0 498 145
- EP-A- 1 829 448
- WO-A-01/26463
- WO-A-2004/080177
- JP-A- 2006 056 784
- US-A- 5 356 861

## Description

This invention relates to a liquid, homogenous herbicide composition, a method of weed control and a method of production of a liquid, homogenous herbicide composition. In more detail the invention relates to the liquid, concentrated herbicide composition containing glyphosate as an active ingredient and a mixture of modifying-activating adjuvants with multifunctional action, overcoming the antagonistic effect of mineral salts found in water used for dilution and application of the herbicide, as well as facilitating retention of spray droplets and wetting of the surface of sprayed plants, intensifying absorption of the herbicide active ingredient into plant cells and its transport to the site of action, ensuring as the result high and stable efficacy of glyphosate used in the composition in various technical and environmental conditions.

Glyphosate [*N*-(phosphonomethyl)glycine] is one of the most frequently applied herbicides for non-selective control of weeds and unwanted plants in agriculture and in non-agricultural areas. In recent years glyphosate also has found wider application for selective weed control in cultivated plant species made resistant to this active substance by genetic modification (RoundupReady^{®} species). Glyphosate is an organic acid, of very low solubility in water. Due to this fact, commercial usable formulations of this herbicide are prepared based on water-soluble glyphosate salts, of which the ispropylamine, ammonium and trimesium salts (in liquid formulations) and ammonium salts (in solid formulations) are most frequently found. Other water-soluble glyphosate salts have been elaborated, described amongst others in patents USA 4405531, USA 4147719, USA 4431594, USA 4437874, USA 5710104, WO 8704712, WO 8303608, DD218366, EP73574, EP115176, EP124351, EP 369076 and EP103055.

Glyphosate is a foliar applied herbicide of systemic action, i.e., after retention of spray droplets on epigeal parts of plants and absorption of the active ingredient into plant cells, it is transported in the plant system to the site of action and there causes the phytotoxic effect, leading as the result to dying of plants. Due to the presence of natural plant barriers - like: the hydrophobic surface of leaves (the cuticle) and the lipoprotein construction of cell membranes, only a small quantity of the applied herbicide retains on the plant surface and reaches the site of action. Stressful environment conditions, especially low soil moisture (soil draught) and low air temperature and humidity have a strong negative influence on the retention, absorption and transport of glyphosate, and as a result, decrease biological activity. Also some mineral salts found in water used for dilution of the herbicide and its application, especially calcium and magnesium salts (causing so called water hardness), sodium, iron, manganese and other metal salts may chemically react with glyphosate, or after precipitation on the leaf surface may physically limit absorption, and as the result decrease the herbicidal activity.

In order to achieve high level of weed control by glyphosate, an appropriately chosen, very specific adjuvant is required for tank-mixing. Adjuvants, showing high suitability for use with this herbicide, include some non-ionic, cationic and amphoteric surface-active substances (surfactants) of high hydrophilicity, as well as some mineral and organic compounds, as for example ammonium sulphate and citric acid.

Adjuvants are introduced directly into glyphosate formulations in the production process (so called "build-in adjuvants"), and also they may be supplemented as separate products into the sprayer tank by the spray operator during preparation of the spray solution.

According to patent description WO 2000032045 surfactants increase glyphosate activity as the result of decreasing the spray drop size produced during spraying and decreasing of the surface tension. The change of the spray drop properties facilitates their retention on the surface of treated plants, allows good contact and increases absorption of the active substance into plant cells by the cuticular, hydrophobic wax layer.

According to patent description USA 6881707, surfactants suitable for activation of glyphosate include amongst others quaternary ammonium salts, amine ethers, alkylpolyglycosides, oxylates of fatty acids, oxyethylated secondary and tertiary alcohols, organosilicone compounds, some glycerides, polyglycerol and its derivatives and other surfactants and their mixtures. In the solution described in patent USA 5912209 in liquid or solid glyphosate formulations other surfactants also may be used such as: alkylmonoglycosides, alkylpolyglycosides, alkylesters, sucroses, tertiary and quaternary ethoxylated and non-ethoxylated alkylamines, alkylamine oxides and alkylbetaines, while according to patent description USA 6451735 it is advantageous to add to a glyphosate potassium salt formulation a mixture of two surfactants, of which one is an alkylglycoside, the second is an oxyethylated alkylamine.

Surfactants mentioned in described inventions, especially oxyethylated fatty amines, which are most frequently introduced into commercial glyphosate formulations or added by the applicator to the spray solution as additional products, do not provide a high glyphosate efficacy in situations when "hard water", rich in calcium and magnesium ions, is used. Similar effect occurs when water containing large quantities of other antagonistic salts, for example sodium and iron, is used for making a spray solution.

It is generally known that ammonium sulphate - a common mineral fertiliser, effectively overcomes the antagonistic effect of antagonistic metal cations in water, and its action is especially distinct, if it is simultaneously used with an appropriately chosen surfactant. However, preparation of the spray solution with addition of the fertiliser form of ammonium sulphate is inconvenient for the user, as it requires preliminary laborious dissolving of this compound in water, and next filtering of the obtained solution before pouring into the sprayer tank in order to separate the insoluble technical impurities. In order to avoid this inconvenience, a number of homogenous solutions, hence convenient adjuvant formulations has been developed, containing ammonium sulphate in a mixture with an appropriately chosen surfactant.

According to patent description USA 5356861 and its continuation RE36149, the adjuvant composition dedicated for application with herbicides containing glyphosate and added to the sprayer tank as a separate product, is composed of a non-ionic surfactant from the alkylpolysaccharide group, ammonium sulphate and water. In patent description USA 6364926 the adjuvant or fertiliser composition is composed of an ampholytic surfactant, various ammonium salts, a spray drift retardant and water. According to patent description USA 6228807 and USA 6645914 (WO 2003/092373) homogenous and stable adjuvant formulations containing ammonium sulphate also can be obtained by mixing this surfactant with amphoteric surfactants represented by amine oxides, betaines and iminodipropionates. Patent description PL 197529 also indicates the possibility of including a cationic surfactant - alkyldimethylpolyoxyethyleneammonium hydroxide and ammonium sulphate in a homogenous and stable formulation. In the description of Austrian patent application WO 0126463 adjuvant formulations have been presented being a mixture of amphoteric surfactants with phospholipids and the ammonium salt of an ethoxylated phosphate ester derivative, and also salts such as: ammonium sulphate, alkylammonium sulphate, potassium phosphate, tetrapotassium pyrophosphate, sodium trisulphate, sodium sulphate and ammonium bicarbonate.

From the point of view of herbicide users it would be most advantageous to use such a glyphosate formulation, which would have a "build-in" adjuvant or a complex of adjuvants that overcome different barriers limiting its action and neutralise the negative effect of disadvantageous technical and environmental conditions. Building-in of an effective adjuvant, strictly a mixture of adjuvants, into the herbicide formulation is thus justified, as it eliminates the necessity of their replenishing addition when preparing the spray solution.

Addition of a complex of different adjuvants, especially a mixture of surfactants and mineral salts directly into the glyphosate formulation is relatively simple only in the case of preparation of very rarely used solid formulations of this herbicide, in which possibility of chemical reactions between the included components is practically insignificant. In accordance with patent description USA 6228807 nonionic, anionic, cationic or amphoteric surfactants with mineral salts represented by ammonium sulphate, potassium sulphate, potassium chloride, sodium sulphate and urea in solid form can be introduced into the solid glyphosate formulation. Unfortunately, in the case of liquid formulations most preferably used in practice, it is considerably more difficult due to the possibility of loss of formulation stability, this being manifested by precipitation of ammonium sulphate and other components already in a short time after preparation. Nevertheless, patent description EP 0274369 indicates a possibility of obtaining a stable, liquid formulation of a glyphosate isopropylamine salt with ammonium sulphate, as a result of introduction into the mixture a surfactant from the group of quaternary ammonium salts. Unfortunately, quaternary ammonium salts, due to disadvantageous influence on the health of humans and on the environment, are not permitted for use with pesticides. According to patent description USA 6432878, a liquid and stable glyphosate formulation with a built-in multicomponent adjuvant can be obtained by adding into the herbicide salt (e.g., isopropylamine or potassium) a mixture of adjuvants made up of a cationic surfactant from the group of oxyethylated fatty amines, citric acid, glycerol, ethylene glycol and propylene glycol. Introduction of a small quantity of citric acid to the described glyphosate formulation radically decreases irritating properties of the cationic surfactant present there, without a negative effect on its effectiveness aiding the herbicide action of glyphosate, while addition of propylene glycol guarantees maintaining of a low formulation viscosity in a wide range of temperatures.

In the description of JP 2233229, a herbicide composition has been presented based on *N*-(phosphonomethyl)glycine and its application. The aim of the solution was obtaining of a liquid composition containing a specific *N*-(phosphonomethyl)glycine, as the active component of the herbicide, ammonium sulphate and a specific linear or cyclic surfactant with incorporated ethylene or propylene oxide, i.e., an oxyethylated or oxypropylated surfactant.

In spite of conducted work and research, liquid glyphosate compositions obtained up till now, containing a mixture of adjuvants, composed of a surfactant, ammonium sulphate and other components, cannot fully optimise biological action of glyphosate in extreme differentiated technical and environmental conditions occurring in practice. This results from the fact that choice of surfactants for these compositions is in the first order determined by their compatibility with glyphosate and other supporting components, especially inorganic substances, such as for example ammonium sulphate, and not necessarily by the optimum influence of these surfactants on herbicidal effectiveness of glyphosate. Also, some formulations obtained until now cannot be practically used, due to the hazard for the environment they create.

The aim of this invention is to develop a multicomponent herbicide composition containing glyphosate and other components, which would overcome the antagonistic interaction of mineral salts found in water used for dilution and application of herbicides, would facilitate retention of spray solution droplets, as well as wetting of the surface of sprayed plants and would intensify absorption of the active ingredient glyphosate to plant cells and its transport to the site of action, which as the result would ensure high and stable effectiveness of the herbicide in the composition according to the herbicide invention in different technical and environmental conditions.

Realisation of such a determined aim and solving of problems described in the state of technology, connected with the choice of surfactants and other auxiliary substances in herbicide compositions, whilst avoiding complications described above, have been achieved in this invention.
The subject of the invention is a liquid, homogenous herbicide composition, containing at least one water-soluble glyphosate salt and a mixture of adjuvants including at least one surfactant, ammonium sulphate, at least one carboxylic acid and additional substances, characterized in that the water-soluble glyphosate salt is isopropylamine, sodium, potassium, ammonium and/or the trimesium salt in the range from 120 to 400 g/L of the glyphosate acid equivalent and that the mixture of adjuvants consists of: a) at least one non-ionic alkylpolyglycoside surfactant or a mixture of surfactants from this group b) ammonium sulphate is contained in the range from 20 to 240 g/L, c) at least one carboxylic acid, and/or mixture of carboxylic acids and/or salts of carboxylic acids contained in the composition in the range from 1 to 50 g/L, d) additional substances, represented by triethanolamine and glycerol, in a ratio from 0.8:1.2 to 1.2:0.8, and the total contents of these substances is from 50 to 200 g/L.
Preferably surfactants are alkylpolyglycoside surfactants, preferably alkylpolyglycoside surfactants of branched alkyl chains made up of 8 to 16 carbon atoms (C₈ to C₁₆) of formula: 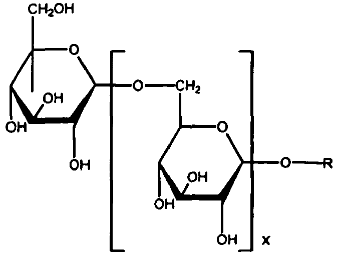 where:
R is a linear C₈ to C₁₆ alkyl chain,;
x is an integer from 0 to 3, and the surfactant or their mixture contents in the herbicide composition is contained in the range from 5 to 150 g/L, preferably from50 to 150 g/L.
Preferably the carboxylic acid is citric acid or an ammonium salt of the citric acid, contained in the range from 5 to 50 g/L.
Preferably the composition is additionally supplemented with a water-soluble salt of 2,4-D (2,4-dichlorophenoxyacetic acid) and/or MCPA (4-chloro-2-methylphenxoyacetic acid) and/or dicamba (3,6-dichloro-o-anisic acid).
Preferably the composition additionally contains antifoaming agents and/or anticorrosion agents and/or antifreezing agents and or agents counteracting drift of spray droplets and/or dyes and/or biostatic agents.

Next subject of the invention is a method of weed control by means of spraying weeds with a solution containing the composition of claim 1 at a concentration of from 0,1 to 20% by volume.

Preferably surfactants are used being alkylpolyglycoside surfactants, more preferably alkylpolyglycoside surfactants of branched alkyl chains made up of 8 to 16 carbon atoms (C₈ to C₁₆) of formula: 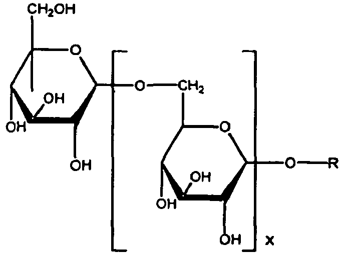 where:
R is a linear C₈ to C₁₆ alkyl chain,;
x is an integer from 0 to 3, and the surfactant or their mixture contents in the herbicide composition is contained in the range from 5 to 150 g/L, preferably from 50 to 150 g/L.
Preferably that the carboxylic acid is citric acid or an ammonium salt of citric acid in a quantity of 5 to 50 g/L.
Preferably the composition additionally contains a water-soluble salt of 2,4-D (2,4-dichlorophenoxyacetic acid) and/or MCPA (4-chloro-2-methylphenxoyacetic acid) and/or dicamba (3,6-dichloro-o-anisic acid).
Preferably the composition additionally contains antifoaming agents and/or anticorrosion agents and/or antifreezing agents and or agents counteracting drift of spray droplets and/or dyes and/or biostatic agents.
The next subject of the invention is a method of production of a liquid, homogenous herbicide composition, containing at least one water-soluble glyphosate salt and a mixture of adjuvants including at least one surfactant, ammonium sulphate, at least one carboxylic acid additional substances and water, characterised in that in step 1) an adjuvant mixture is prepared of a) at least one non-ionic alkylpolyglycoside surfactant or a mixture of surfactants from this group, b) ammonium sulphate is contained in the range from 20 to 240 g/L, c) at least one carboxylic acid and/or mixture of carboxylic acids, and/or salts of carboxylic acids contained in the composition in the range from 1 to 50 g/L, additional substances, allowing stable blending of all components with glyphosate, represented by of triethanolamine and glycerol, in a ratio from 0.8:1.2 to 1.2:0.8, where the total contents of these substances in the composition is from 50 to 200 g/L, after which in step 2 glyphosate isopropylamine salt contained in the range from 120 to 400 g/L of the glyphosate acid equivalent, and substances allowing blending of all components in a homogenous and stable composition are added to this mixture.
Preferably surfactants are used being alkylpolyglycoside surfactants, more preferably alkylpolyglycoside surfactants of branched alkyl chains made up of 8 to 16 carbon atoms (C₈ to C₁₆) of formula: 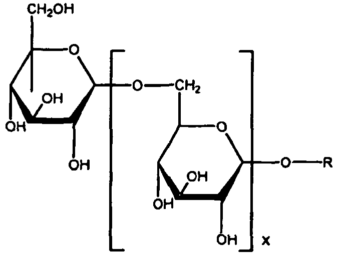 where:
R is a linear C₈ to C₁₆ alkyl chain;
x is an integer from 0 to 3, and the surfactant or their mixture contents in the herbicide composition is contained in the range from 5 to 150 g/L, preferably from 50 to 150 g/L
   Preferably a water-soluble salt of 2,4-D (2,4-dichlorophenoxyacetic acid) and/or MCPA (4-chloro-2-methylphenxoyacetic acid) and/or dicamba (3,6-dichloro-o-anisic acid) are additionally introduced to the composition.
   Preferably antifoaming agents and/or anticorrosion agents and/or antifreezing agents and/or agents counteracting drift of spray droplets and/or dyes and/or biostatic agents are additionally introduced to the composition.

Substances allowing blending of all components in a homogenous and stable composition, namely triethanolamine and glycerol, are an extremely significant part of the glyphosate composition being the subject of the invention. It was unexpectedly found that these components added to the formulation in quantities from 20 to 75 g/L each and in a 1:1 ratio, allow obtaining of a homogenous mixture, which is stable for a period of at least 180 days in the 0 to 30°C temperature range. Glycerol in the formulation additionally fulfils the function of adjuvant, more strictly a humectant - a substance limiting complete evaporation of water from spray droplets and allowing due to this more complete absorption of glyphosate into plant cells.

The composition being the subject of the invention can be prepared by mixing all components in determined quantities in a mechanical or hydraulic mixer. It is more advantageous to use an appropriate quantity of one glyphosate salt (the quantity of salt will depend on the intended contents of the acid glyphosate equivalent in the formulation), and next addition to the mixer of an earlier prepared mixture of adjuvants to a determined volume and mixing to the moment of obtaining a homogenous composition.

The herbicide composition, the object of the invention, is assigned for weed control in agriculture and in non-agricultural areas after dilution with water and preparation of the spray solution with all types of sprayers and applicators. In the case of hydraulic sprayers, the formulation in the required rate is added to a determined quantity of water, depending on the sprayer spray volume. The quantity of the spray solution in which the herbicide formulation constitutes usually from 1 to 10%, varies in practical conditions from 50 to 400 L/ha.

The invention is presented in examples below, which however do not exhaust all possible methods of preparation and application.

### Example 1

In the example the preparation method has been given of a herbicide composition containing 240 g/L of the acid glyphosate equivalent and a mixture of adjuvants by a two-step method. a) step 1 - preparation of a mixture of adjuvants with substances allowing stable blending of all components with glyphosate. The following have been added to a 1 litre Erlenmeyer flask:
1. 500 g (50% by weight) of ammonium sulphate in the form of a 40% aqueous solution,
2. 40 g (4% by weight) of citric acid,
3. 206 g (20.6% by weight) of a non-ionic surfactant from the group of alkylopolyglycosides (commercial product GLUCOPON 650 EC from Cognis Co. being a 50% aqueous solution of the alkylopolyglycoside surfactant),
4. 120 g (12% by weight) of triethanolamine,
5. 130 g (13% by weight) of glycerol,
6. 4 g (0.4% by weight) of an antifoaming agent (STRUKTOL SB 2032 product from ICSO Chemical Production Spólka z o.o.)
All were mixed with a magnetic stirrer at a temperature of approx. 20°C for about 10 minutes until complete homogenization had been reached. A clear, straw-yellow solution has been obtained, containing 20% by weight of pure ammonium sulphate, 4% by weight of citric acid, 10.3% by weight of pure non-ionic surfactant from the group of alkylpolyglycosides, 12% by weight of triethanolamine, 13% by weight of glycerol, 0.4% by weight of antifoaming agent and 40.3% by weight of water. The density of such prepared mixture was equal to 1.20 g/cm³, while the pH of 5.5. b) step 2 - preparation of the final composition.
To a 1 litre Erlenmeyer flask were added 516 g of 62% glyphosate isopropylamine salt, and next 696.4 g (to a volume of 1 litre) of the adjuvant mixture prepared in step 1 with substances allowing blending of all components into a homogenous and stable formulation. All were mixed with a magnetic stirrer to the moment of obtaining a homogenous straw-yellow solution. In one litre of such a prepared herbicide composition the following were present: 516 g of 62% isopropylamine salt of glyphosate (corresponding to 240 g of acid equivalent), 138.9 g of ammonium sulphate, 27.8 g of citric acid, 71.5 g of pure non-ionic surfactant from the group of alkylopolyglycosides, 83.3 g of triethanolamine, 90.3 g of glycerol, 2.8 g of antifoaming agent. Water formed the remaining part of the formulation. The formulation density was equal to 1.21 g/cm³, and the pH 4.7.

### Example 2

The composition obtained in example 1, designated as EXPH-1 240 SL (of 240 g/L contents of glyphosate acid equivalent) and formulation EXPH-2 180 SL obtained in a similar way as in example 1 (of 180 g/L contents of glyphosate acid equivalent) were tested at different rates in a field experiment in order to determine the herbicidal effectiveness against couch grass [*Elymus repens* (L.) Gould]. The experiment was performed in a non-agricultural area, uniformly infested with couch grass (120-180 sprouts per 1 m²). Herbicides EXPH-1 240 SL and EXPH-2 180 SL were applied at rates 360, 720 and 1080 g/ha (according to the acid equivalent) with water of 22 German degrees of total hardness. For comparison two reference preparations have been applied in the same rates according to the glyphosate acid equivalent - Roundup 360 SL and Roundup Energy 450 SL - preparations from Monsanto Co. Spraying treatment was performed at the 4-8 leaf couch grass stage, with a hydraulic boom sprayer from R&D, equipped with 4 TeeJet-11002VP nozzles, ensuring spray volume of 170 1/ha. The experiment was conducted using a randomised complete block design with four replicates-and the area of an individual plot was equal to 20 m². Visual assessment of the herbicidal effectiveness in relation to couch grass was performed 2, 4 and 8 weeks after treatment. Results presented in table 1 indicate that EXPH-1 240 SL, and especially EXPH-2 180 SL, have shown greater herbicidal effectiveness than the comparative reference herbicides containing glyphosate, especially when they had been applied in lower rates.

**Table 1 Efficacy of herbicides containing glyphosate in relation to couch grass (Elymus repens)**

| Herbicide | Glyphosate rate [g ai/ha] | Weeks after treatment* | | |
|---|---|---|---|---|
| | | 2 | 4 | 8 |
| | | couch grass control [%] | | |
| Roundup 360 SL | 360 | 20 | 39 | 42 |
| Roundup Energy 450 SL | 360 | 20 | 35 | 40 |
| EXPH-1 240 SL | 360 | 23 | 45 | 48 |
| EXPH-2 180 SL | 360 | 28 | 58 | 55 |
| Roundup 360 SL | 720 | 40 | 63 | 71 |
| Roundup Energy 450 SL | 720 | 40 | 60 | 70 |
| EXPH-1 240 SL | 720 | 75 | 95 | 98 |
| EXPH-2 180 SL | 720 | 80 | 96 | 99 |
| Roundup 360 SL | 1080 | 80 | 90 | 92 |
| Roundup Energy 450 SL | 1080 | 78 | 90 | 90 |
| EXPH-1 240 SL | 1080 | 92 | 99 | 99 |
| EXPH-2 180 SL | 1080 | 90 | 99 | 99 |
| NIR(0.05) | | 7 | 9 | 5 |

| | | | | |
|---|---|---|---|---|
| * spraying treatment was performed on 11.08.2008 | | | | |

## Claims

1. A liquid, homogenous herbicide composition, containing at least one water-soluble glyphosate salt and a mixture of adjuvants including at least one surfactant, ammonium sulphate, at least one carboxylic acid and additional substances, **characterized in that** the water-soluble glyphosate salt is isopropylamine, sodium, potassium, ammonium and/or the trimesium salt in the range from 120 to 400 g/L of the glyphosate acid equivalent and that the mixture of adjuvants consists of: a) at least one non-ionic alkylpolyglycoside surfactant or a mixture of surfactants from this group b) ammonium sulphate is contained in the range from 20 to 240 g/L, c) at least one carboxylic acid, and/or mixture of carboxylic acids and/or salts of carboxylic acids contained in the composition in the range from 1 to 50 g/L, d) additional substances, represented by triethanolamine and glycerol, in a ratio from 0.8:1.2 to 1.2:0.8, and the total contents of these substances is from 50 to 200 g/L.

2. The composition according to claim 1, **characterized in that** surfactants are alkylpolyglycoside surfactants, preferably alkylpolyglycoside surfactants of branched alkyl chains made up of 8 to 16 carbon atoms (C₈ to C₁₆) of formula: 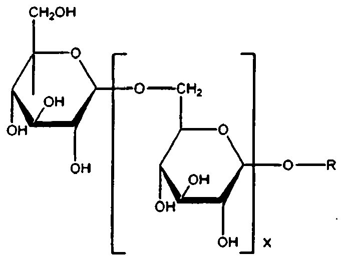 where:
R is a linear C₈ to C₁₆ alkyl chain,;
x is an integer from 0 to 3, and the surfactant or their mixture contents in the herbicide composition is contained in the range from 5 to 150 g/L, preferably from50 to 150 g/L.

3. The composition according to claim 1, **characterised in that** the carboxylic acid is citric acid or an ammonium salt of the citric acid, contained in the range from 5 to 50 g/L.

4. The composition according to claim 1, **characterised in that** the composition is additionally supplemented with a water-soluble salt of 2,4-D (2,4-dichlorophenoxyacetic acid) and/or MCPA (4-chloro-2-methylphenxoyacetic acid) and/or dicamba (3,6-dichloro-o-anisic acid).

5. The composition according to claim 1, **characterised in that** the composition additionally contains antifoaming agents and/or anticorrosion agents and/or antifreezing agents and or agents counteracting drift of spray droplets and/or dyes and/or biostatic agents.

6. A method of weed control by means of spraying weeds with a solution containing the composition of claim 1 at a concentration of from 0,1 to 20% by volume.

7. The method according to claim 6, **characterized in that** surfactants are used being alkylpolyglycoside surfactants, preferably alkylpolyglycoside surfactants of branched alkyl chains made up of 8 to 16 carbon atoms (C₈ to C₁₆) of formula: 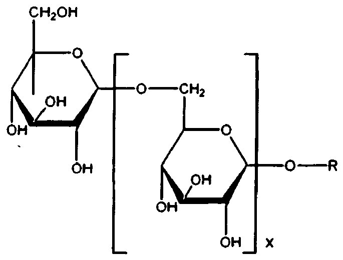 where:
R is a linear C₈ to C₁₆ alkyl chain,;
x is an integer from 0 to 3, and the surfactant or their mixture contents in the herbicide composition is contained in the range from 5 to 150 g/L, preferably from 50 to 150 g/L.

8. The method according to claim 6, **characterized in that** the carboxylic acid is citric acid or an ammonium salt of citric acid in a quantity of 5 to 50 g/L.

9. The method according to claim 6, **characterised in that** the composition additionally contains a water-soluble salt of 2,4-D (2,4-dichlorophenoxyacetic acid) and/or MCPA (4-chloro-2-methylphenxoyacetic acid) and/or dicamba (3,6-dichloro-o-anisic acid).

10. The method according to claim 6, **characterised in that** the composition additionally contains antifoaming agents and/or anticorrosion agents and/or antifreezing agents and or agents counteracting drift of spray droplets and/or dyes and/or biostatic agents.

11. A method of production of a liquid, homogenous herbicide composition, containing at least one water-soluble glyphosate salt and a mixture of adjuvants including at least one surfactant, ammonium sulphate, at least one carboxylic acid additional substances and water, **characterised in that** in step 1) an adjuvant mixture is prepared of a) at least one non-ionic alkylpolyglycoside surfactant or a mixture of surfactants from this group b) ammonium sulphate is contained in the range from 20 to 240 g/L, c) at least one carboxylic acid and/or mixture of carboxylic acids, and/or salts of carboxylic acids contained in the composition in the range from 1 to 50 g/L, additional substances, allowing stable blending of all components with glyphosate, represented by of triethanolamine and glycerol, in a ratio from 0.8:1.2 to 1.2:0.8, where the total contents of these substances in the composition is from 50 to 200 g/L, after which in step 2 glyphosate isopropylamine salt contained in the range from 120 to 400 g/L of the glyphosate acid equivalent, and substances allowing blending of all components in a homogenous and stable composition are added to this mixture.

12. The method according to claim 11, **characterized in that** surfactants are used being alkylpolyglycoside surfactants preferably alkylpolyglycoside surfactants of branched alkyl chains made up of 8 to 16 carbon atoms (C₈ to C₁₆) of formula: 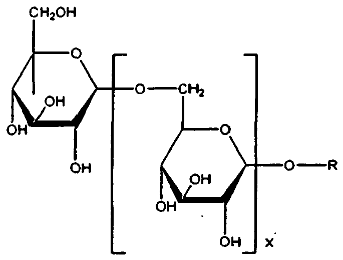 where:
R is a linear C₈ to C₁₆ alkyl chain;
x is an integer from 0 to 3, and the surfactant or their mixture contents in the herbicide composition is contained in the range from 5 to 150 g/L, preferably from 50 to 150 g/L

13. The method according to claim 11, **characterised in that** a water-soluble salt of 2,4-D (2,4-dichlorophenoxyacetic acid) and/or MCPA (4-chloro-2-methylphenxoyacetic acid) and/or dicamba (3,6-dichloro-o-anisic acid) are additionally introduced to the composition.

14. The method according to claim 11, **characterised in that** antifoaming agents and/or anticorrosion agents and/or antifreezing agents and/or agents counteracting drift of spray droplets and/or dyes and/or biostatic agents are additionally introduced to the composition.

## Patentansprüche

1. Eine flüssige, homogene Herbizidzusammensetzung, enthaltend mindestens ein wasserlösliches Glyphosatsalz und eine Mischung von Adjuvanten, die mindestens ein Tensid, Ammoniumsulfat, mindestens eine Carbonsäure und eine zusätzliche Substanzen, umfasst, **dadurch gekennzeichnet, dass** das wasserlösliche Cilyphosatsalz Isoprupylamin-, Natrium-, Kalium-, Ammonium- und/oder das Trimesiumsalz im Bereich von 120 bis 400 g/L des Glyphosatsäure-Äquivalent ist, und dass die Mischung aus Adjuvanten:
a) mindestens einem nicht-ionischen Alkylpolyglycosidtensid oder einer Mischung von Tensiden aus dieser Gruppe,
b) Ammoniumsulfat im Bereich von 20 bis 240 g/L enthalten ist,
c) mindestens einer Carbonsäure und/oder einer Mischung von Carbonsäuren und/oder Salzen von Carbonsäuren enthalten in der Zusammensetzung im Bereich von 1 bis 50 g/L,
d) zusätzlichen Substanzen, dargestellt als Triethanolamin und Glycerol, in einem Verhältnis von 0,8:1,2 bis 1,2:0,8, wobei der Gesamtgehalt dieser Stoffe von 50 bis 200 g/L beiträgt,
besteht.

2. Zusammensetzung nach Anspruch 1, **dadurch gekennzeichnet, dass** Tenside Alkylpolyglycosidtenside, vorzugsweise Alkylpolyglycosidtenside mit verzweigten Alkylketten aus 8 bis 16 Kohlenstoffatomen (C₈ bis C₁₆) sind, mit der Formel: 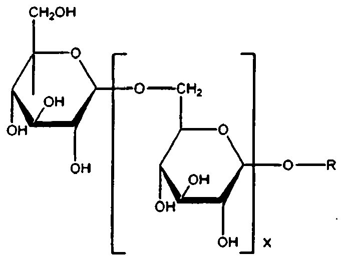 wo:
R für eine lineare C₈ bis C₁₆ Alkylkette steht;
x für eine ganze Zahl von 0 bis 3 steht, und das Tensid oder die Mischungs Inhalte in der Herbizidzusammensetzung im Bereich von 5 bis 150 g/L, bevorzugt von 50 bis 150 g/L enthalten ist.

3. Zusammensetzung nach Anspruch 1, **dadurch gekennzeichnet, dass** die Carbonsäure für Zitronensäure oder eine Ammoniumsalz der Zitronensäure steht, enthalten im Bereich von 5 bis 50 g/L.

4. Zusammensetzung nach Anspruch 1, **dadurch gekennzeichnet, dass** die Zusammensetzung zusätzlich mit einem wasserlöslichen Salz der 2,4-D (2,4-Dichlorphenoxyessigsäure) und/oder MCPA (4-Chlor-2-Methylphenoxyessigsäure) und/oder Dicamba (3,6-Dichlor-o-Anisinsäure) ergänzt ist.

5. Zusammensetzung nach Anspruch 1, dadurch gekenntzeichnet, dass die Zusammensetzung zusätzlich Antischaummittel und/oder Korrosionsschutzmittel und/oder Frostschutzmittel und/oder der Strömung von Sprühiröpfchen entgegenwirkende Mittel und/oder Farbstoffe und/oder Biostatika enthält,

6. **Verfahren** zur Unkrautbekämpfung durch Besprühen von Unkräutern mit einer Lösung, die die Zusammensetzung nach Anspruch 1 in einer Konzentration von 0,1 bis 20 Vol.-% enthält.

7. Verfahren nach Anspruch 6, **dadurch gekennzeichnet, dass** die Tenside als Alkylpolyglycosidtenside, vorzugsweise Alkylpolyglycosidtenside mit verzweigten Alkylketten aus 8 bis 16 Kohlenstoffatomen (C₈ bis C₁₆) verwendet werden, mit der Formel: 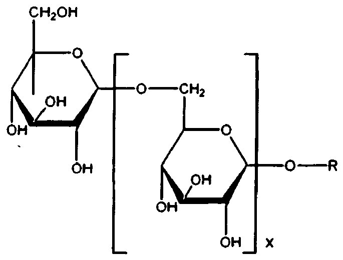 wo:
R für eine lineare C₈ bis C₁₆ Alkylkette steht;
x für eine ganze Zahl von 0 bis 3 steht, und das Tensid oder die Mischung Inhalte in der Herbizidzusammensetzung im Bereich von 5 bis 150 g/L, bevorzugt von 50 bis 150 g/L enthalten ist.

8. Verfahren nach Anspruch 6, **dadurch gekennzeichnet, dass** die Carbonsäure Zitronensäure oder ein Ammonium-Salz der Zitronensäure in einer Menge von 5 bis 50 g/L ist.

9. Verfahren nach Anspruch 6, **dadurch gekennzeichnet, dass** die Zusammensetzung zusätzlich ein wasserlösliches Salz der 2,4-D (2,4-Dichlorphenoxyessigsliure) und/oder MCPA (4-Chlor-2-Methylphenoxyessigsäure) und/oder Dicamba (3,6-Dichlor-o-Anisinsäure) enthält.

10. Verfahren nach Anspruch 6, **dadurch gekennzeichnet, dass** die Zusammensetzung zusätzliche Entschäumungsmittel und/oder Korrnsionsschutzmittel und/oder Frostschutzmittel und/oder der Strömung von Sprühtropfchen entgegenwirkende Mittel und/oder Farbstoffe und/oder Biostatika enthält.

11. **Verfahren zur Herstellung** einer flüssigen, homogenen Herbizidzusammensetzung enthaltend mindestens ein wasserlösliches Glyphosatsalz und eine Mischung von Adjuvanten, die mindestens ein Tensid, Ammoniumsulfat, mindestens eine Carbonsäure und zusätzliche Substanzen und Wasser umfassen, **dadurch gekennzeichnet, dass** in einem Schritt 1) eine Adjuvantenmischung zubereitet wird aus
a) mindestens einem nicht-ionischen Alkylpolyglycosidtensid oder eine Mischung von Tensiden aus dieser Gruppe
b) Ammoniumsulfat enthalten im Bereich von 20 bis 240 g/L;
c) mindestens einer Carbonsäure und/oder einer Mischung von Carbonsäuren, und/oder Salzen von Carbonsäuren in der Zusammensetzung enthalten im Bereich von 1 bis 50 g/L, zusätzlichen Substanzen zum stabilen Vermischen aller Komponenten mit Glyphosat, durch Triethanolamin und Glycerol dargestellt, in einem Verhältnis von 0,8:1,2 bis 1,2:0,8, wobei die Gesamtgehalte dieser Substanzen in der Zusammensetzung von 50 bis 200 g/L beträgt, wonach in einem Schritt 2) Glyphosatisopropytaminsalz enthalten im Bereich von 120 bis 400 g/L des Glyphosatsäure-Äquivalent, und Substanzen, die ein Vermischen aller Komponenten in einer homogenen und stabilen Zusammensetzung zulassen, zu dieser Mischung zugegeben werden.

12. Verfahren nach Anspruch 11, **dadurch gekennzeichnet, dass** die Tenside als Alkylpolyglycosidtenside, vorzugsweise Alkylpolyglycosidtenside mit verzweigten Alkylketten aus 8 bis 16 Kohlenstoffatomen (C₈ bis C₁₆) verwendet werden, mit der Formel: 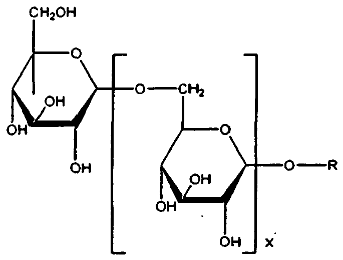 wo:
R für eine lineare C₈ bis C₁₆ Alkylkette steht;
x für eine ganze Zahl von 0 bis 3 steht, und das Tensid oder die Mischungsinhalte in der Herbizidzusammensetzung im Bereich von 5 bis 150 g/L, bevorzugt von 50 bis 150 g/L enthalten ist.

13. Verfahren nach Anspruch 11, **dadurch gekennzeichnet, dass** ein wasserlösliches Salz der 2,4-D (2,4-Dichlorphenoxyessigsäure) und/oder MCPA (4-Chlor-2-methylphenoxy-essigsäure) und/oder Dicamba (3, 6-Dichlor-o-Anisinsäure) zusätzlich zu der Zusammensetzung eingeführt wird.

14. Verfahren nach Anspruch 11, **dadurch gekennzeichnet, dass** Entschäumungsmütel und/oder Korrosionsschutzmittel und/oder Frostschutzmittel und/oder der Strömung von Sprühtröpfchen entgegenwirkende Mitteln und/oder Farbstoffe und/oder Biostatika zusätzlich zu der Zusammensetzung eingeführt werden.

## Revendications

1. Composition herbicide liquide homogène, contenant au moins un sel soluble dans l'eau de glyphosate et un mélange d'adjuvants comprenant au moins un agent tensioactif, sulfate d'ammonium, au moins un acide carboxylique et des substances additionnelles, **caractérisée en ce que** le sel de glyphosate soluble dans l'eau est un sel d'isopropylamine, de sodium, de potassium, d'ammnnium et/ou de trimésium dans la plage de 120 à 400 g/L d'équivalent d'acide de glyphosate et **en ce que** le mélange d'adjuvants est constitué de: a) au moins un agent tensioactif alkylpolyglycoside non ionique ou un mélange d'agents tensioactifs de ce groupe b) sulfate d'ammonium est contenu dans la plage de 20 à 240 g/L, c) au moins un acide carboxylique et/ou un mélange d'acides carboxyliques et/ou sels d'acides carboxyliques contenus dans la composition dans la plage de 1 à 50 g/L, d) substances additionnelles, représentées par triéthanolamine et glycérol, dans un rapport de 0,8:1,2 à 1,2:0,8, et le contenu total de ces substances est de 50 à 200 g/L.

2. Composition selon la revendication 1, **caractérisée en ce que** des agents tensioactif sont des agents tensioactifs alkylpolyglycosides, de préférence des agents tensioactif alkylpolyglycosides de chaînes alkyle ramifiées constituées de 8 à 16 atomes de carbone (C₈ à C₁₆) de formule: 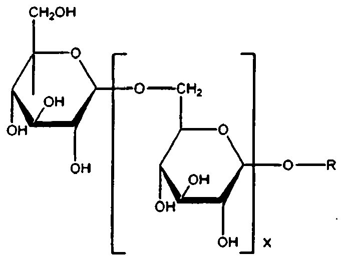 où:
R est une chaîne alkyle linéaire C₈ à C₁₆ ;
x est un nombre entier de 0 à 3, et l'agent tensioactif ou le contenu de leur mélange dans la composition herbicide est contenu dans la plage de 5 à 150 g/L, de préférence de 50 à 150 g/L.

3. Composition selon la revendication 1, **caractérisée en ce que** l'acide carboxylique est l'acide citrique ou un sel d'ammonium de l'acide citrique, contenu dans la plage de 5 à 50 g/L.

4. Composition selon la revendication 1, **caractérisée en ce que** la composition est en outre complétée par un sel soluble dans l'eau de 2,4-D (acide 2,4-dichlorophénoxyacétique) et/ou MCPA (acide 4-chloro-2-méthylphénoxyacétique) et/ou dicamba (acide 3,6-dichloro-o-anisique).

5. Composition selon la revendication 1, **caractérisée en ce que** la composition contient en outre des agents antimousses et/ou des agents anticorrosifs et/ou des agents antigels et/ou des agents empêchant le déplacement des gouttelettes de pulvérisation et/ou des colorants et/ou des agents biostatiques.

6. Procédé de désherbage au moyen d'une pulvérisation des mauvaises herbes avec une solution contenant la composition de la revendication 1 à une concentration de 0,1 à 20% en volume.

7. Procédé selon la revendication 6, **caractérisé en ce que** que les agents tensioactifs sont utilisés étant des agents tensioactifs alkylpolyglycosides, de préférence des agents tensioactifs alkylpolyglycosides de chaînes alkyle ramifiées constituées de 8 à 16 atomes de carbone (C₈ à C₁₆) de formule: 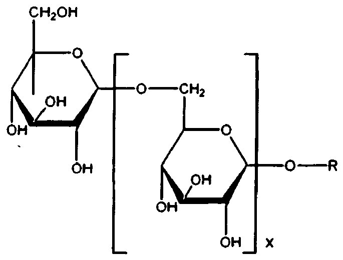 où:
R est une chaîne alkyle linéaire C₈ àC₁₆ ;
x est un nombre entier de 0 à 3, et l'agent tensioactif ou le contenu de leur mélange dans la composition herbicide est contenu dans la plage de 5 à 150 g/L, de préférence de 50 à 150 g/L.

8. Procédé selon la revendication 6, **caractérisé en ce que** l'acide carboxylique est l'acide citrique ou un sel d'ammonium de l'acide citrique, en une quantité de 5 à 50 g/L.

9. Procédé selon la revendication 6, caractérisé en cc que la composition contient en outre un sel soluble dans l'eau de 2,4-D (acide 2,4-dichlorophénoxyacétique) et/ou MCPA (acide 4-chloro-2-méthylphénoxyacétique) et/ou dicamba (acide 3,6-dichloro-o-anisique).

10. Procédé selon la revendication 6, **caractérisé en ce que** la composition contient en outre des agents antimousses et/ou des agents anticorrosifs et/ou des agents antigels et/ou des agents empêchant le déplacement des gouttelettes de pulvérisation et/ou des colorants et/ou des agents biostatiques.

11. Procédé de production d'une composition herbicide liquide homogène contenant au moins un sel soluble dans l'eau de glyphosate et un mélange d'adjuvants comprenant au moins un agent tensioactif, sulfate d'ammonium, au moins un acide carboxylique substances additionnelles et de l'eau, **caractérisé en ce que** à l'étape 1) on prépare un mélange d'adjuvants de
a) au moins un agent tensioactif alkylpolyglycoside non ionique ou un mélange d'agents tensioactifs de ce groupe
b) sulfate d'ammonium est contenu dans la plage de 20 à 240 g/L, c) au moins un acide carboxylique et/ou un mélange d'acides carboxyliques et/ou sels d'acides carboxyliques contenus dans la composition dans la plage de 1 à 50 g/L, des substances additionnelles, permettant le mélange stable de tous les composants avec du glyphosate, représentées par triéthanolamine et glycérol, dans un rapport de 0,8:1,2 à 1,2:0,8, où le contenu total de ces substances est de 50 à 200 g/L, après quoi, à l'étape 2 on ajoute à ce mélange un sel d'isopropylamine de glyphosate contenu dans la plage de 120 à 400 g/L de l'équivalent d'acide de glyphosate et des substances permettant de mélanger tous les composants dans une composition homogène et stable.

12. Procédé selon la revendication 11, **caractérisé en ce que** les agents tensioactifs sont utilisés étant des agents tensioactifs alkylpolyglycosides, de référence des agents tensioactifs alkylpolyglycosides de chaînes alkyle ramifiées constituées de 8 à 16 atomes de carbone (C8 à C16) de formule: 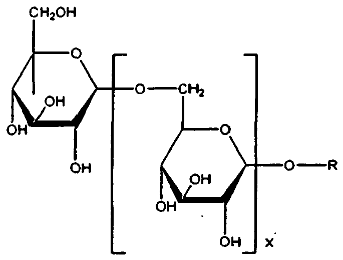 où:
R est une chaîne alkyle linéaire C₈ à C₁₆ ;
x est un nombre entier de 0 à 3, et l'agent tensioactif ou le contenu de leur mélange dans la composition herbicide est contenu dans la plage de 5 à 150 g/L, de préférence de 50 à 150 g/L.

13. Procédé selon la revendication 11, **caractérisé en ce qu'**on introduit en outre à la composition un sel soluble dans l'eau de 2,4-D (acide 2,4-dichlorophénoxyacétique) et/ou MCPA (acide 4-chloro-2-méthylphénoxyacétique) et/ou dicamba (acide 3,6-dichloro-o-anisique).

14. Procède selon la revendication 11, **caractérisé en ce qu'**on introduit en outre à la composition des agents antimousses et/ou des agents anticorrosifs et/ou des agents antigels et/ou des agents empêchant le déplacement des gouttelettes de pulvérisation et/ou des colorants et/ou des agents biostatiques.
